Europäisches Patentamt

European Patent Office

Office européen des brevets

(11) Veröffentlichungsnummer: **0 225 513 B1**

(19)

(12) **EUROPÄISCHE PATENTSCHRIFT**

(45) Veröffentlichungstag der Patentschrift: 24.07.91

(51) Int. Cl.⁵: **A61C 13/00**, B23H 3/04, B23H 1/00

(21) Anmeldenummer: 86115979.6

(22) Anmeldetag: 18.11.86

(54) **Verfahren und Vorrichtung zur Herstellung von Zahnersatz.**

(30) Priorität: 13.12.85 DE 3544123

(43) Veröffentlichungstag der Anmeldung:
16.06.87 Patentblatt 87/25

(45) Bekanntmachung des Hinweises auf die
Patenterteilung:
24.07.91 Patentblatt 91/30

(84) Benannte Vertragsstaaten:
AT CH ES FR GB IT LI NL SE

(56) Entgegenhaltungen:
DE-A- 2 315 252
DE-A- 3 118 890
DE-A- 3 320 902

(73) Patentinhaber: **Walter, Herbert**
**Jockelsberg 4**
**W-7239 Fluorn-Winzeln(DE)**

(72) Erfinder: **Walter, Herbert**
**Jockelsberg 4**
**W-7239 Fluorn-Winzeln(DE)**
Erfinder: **Körber, Erich, Prof.Dr.med.dent.**
**Hartmeyerstrasse 64**
**W-7400 Tübingen(DE)**
Erfinder: **Gentischer, Josef, Dipl.-Ing. (FH)**
**Weinbergweg 31**
**W-7064 Remshalden(DE)**

(74) Vertreter: **Dreiss, Hosenthien & Fuhlendorf**
**Gerokstrasse 6**
**W-7000 Stuttgart 1(DE)**

## Beschreibung

Die Erfindung betrifft ein Verfahren und eine Vorrichtung zur Herstellung von Zahnersatzteilen mittels des Funkenerosionsverfahrens mit den Merkmalen der im Oberbegriff des Patentanspruchs 1 beschriebenen Gattung.

Derartige Verfahren und Vorrichtungen sind an sich bekannt (Siehe z.B. DE-A-3320902). Aus der DE-OS 31 18 890 ist ein Verfahren zur Herstellung von Zahnersatzteilen bekannt, bei dem ein metallisches Sekundärteil abnehmbar über Halteelemente an einem ebenfalls metallischen festsitzenden Primärteil verankert ist. Als Halteelemente dienen Riegel oder Friktionsstifte, für die entsprechende Aufnahmen mit genauer Passung im Primär- und im Sekundärteil geschaffen werden. Dazu wird eine Erosionsmaschine eingesetzt, mit der die Lager für den Riegel im Primärteil wie auch im Sekundärteil gemeinsam durch Funkenerosion hergestellt werden. Die Erosionsmaschine wird dabei lediglich als ein Bohrwerkzeug für die Herstellung der Lager der Riegel benutzt. Wie dagegen das Primärteil an den Zahnstumpf oder das Sekundärteil an das Primärteil hinsichtlich der Kontaktfläche angepaßt werden bleibt völlig offen.

Aus der DE-OS 33 20 902 ist ferner ein Verfahren zur Herstellung von Zahnersatzteilen bekannt geworden, bei dem der elektrisch leitfähig gemachte und überzogene Gipsmodellstumpf, der dem vom Zahnarzt geformten Zahnstumpf entspricht, als Elektrode zur funkenerosiven Nacharbeit des Paßsitzes des durch Gießen hergestellten Zahnersatzes herangezogen wird. Bis zum Herstellen eines zementierbaren durch Gießen hergestellten Modells des Zahnersatzes sind fünf Negativ-Positiv-Übertragungen erforderlich. Der erste Abformschritt ist die Erstellung der negativen Abdruckform des natürlichen Zahnstumpfes. Von dieser Abdruckform wird ein positives Gipsmodell hergestellt. Das positive Gipsmodell wird durch ein Wachsmodell des Zahntechnikers ergänzt. Das positive Wachsmodell wird in eine Form in eine Abgußmasse eingebettet und ausgeschmolzen. In die so geschaffene Gußform wird Metall eingegossen und so das Metallmodell des Zahnersatzes hergestellt. Jeder dieser Abformschritte ist mit verfahrensbedingten Fehlern behaftet, die sich teilweise in positiven, teilweise auch in negativen Dimensionsänderungen äußern. Diese Dimensionsänderungen entstehen beispielsweise durch polymerisationsbedingte Volumenänderungen der Abdruckmasse bei der Herstellung der negativen Abdruckform. Bei der Herstellung des Gipsmodelles kann eine Gipsexpansion auftreten. Die Verarbeitungsfehler des Waches resultieren aus den Wachseigenschaften und der Verarbeitungstemperatur des Wachses. Auch die Abkühlung des Wachses und Abbindevorgänge an der Einbettmasse können zu Fehlern führen. Auch die Verarbeitungstemperatur des flüssig eingegossenen Metalls und dessen Dimensionsänderung bei der Abkühlung beeinträchtigen die genaue Herstellung eines Metallmodells, es bilden sich beispielsweise Poren und Lunker, ferner stellen sich Gefügeänderungen ein, die zur Korrosion führen. Mit jeder Abformung addieren sich die verfahrensbedingten Fehler, was zu erheblichen Dimensionsänderungen führt, die nicht mehr toleriert werden können und zu erheblichen Nacharbeit für den Paßsitz des Zahnersatzteils führen, wobei die Kosten für diese Nacharbeit bis zur Hälfte der Kosten des gesamten Zahnersatzes betragen kann. Als weiterer erheblicher Nachteil des auf dem gießtechnischen Wege hergestellten Zahnersatzteiles besteht darin, daß nur gießfähige Materialien verwendet werden können oder gießfähige Materialien wegen zu hoher Schmelztemperatur nicht eingesetzt werden konnten. So konnten beispielsweise kaltverfestigte Metalle nicht eingesetzt werden, die wesentlich kostengünstiger sind und von vornherein eine Lunkerbildung und eine Gefügeänderung ausschließen.

Der Erfindung liegt deshalb die Aufgabe zugrunde, Zahnersatz technisch einfach und kostengünstig herzustellen, ferner eine Herstellung ohne jede Nacharbeit bezüglich der Paßform und ohne die beim Gießen entstehenden Materialprobleme zu ermöglichen und damit neue und bessere Materialien verwenden zu können, die gießtechnisch nicht verarbeitet werden können.

Die Vorteile der Erfindung bestehen insbesondere darin, daß ein Gießvorgang bei der Herstellung des Zahnersatzteiles vermieden wird. Durch das funkenerosive Herausarbeiten des Zahnersatzteiles direkt aus dem vollen Material werden jegliche Paßfehler zwischen dem Zahnersatzteil und dem präparierten Zahnstumpf vermieden. Verwendet man für die Erstellung der negativen Abdruckform des Zahnes gleich elektrisch leitfähiges Material und tut dies auch bei der Erstellung des Modells des Zahnersatzteils, so können direkt von diesen elektrisch leitfähigen Teilen die negativen Formen der Formelektroden für das erosive Verfahren erstellt werden. Durch den Wegfall des Gießvorgangs bei der Herstellung des Zahnersatzteils können außerdem kostengünstige Metalle Verwendung finden, die beispielsweise kalt verfestigt sind. Diese Materialien besitzen teilweise bessere Eigenschaften als Gold in ihrer Funktion als Zahnersatz.

Nachstehend wird die Erfindung anhand von Ausführungsbeispielen von Zeichnungen noch näher erläutert. Es zeigen:

Figur 1     eine erste Ausführungsform des Verfahrens und der Vorrichtung zur Herstellung von Zahnersatzteilen auf dem funkenerosiven Weg und

Figur 2    ein zweites Verfahren zur Herstellung des Zahnersatzes ohne Guß auf funkenerosivem Weg.

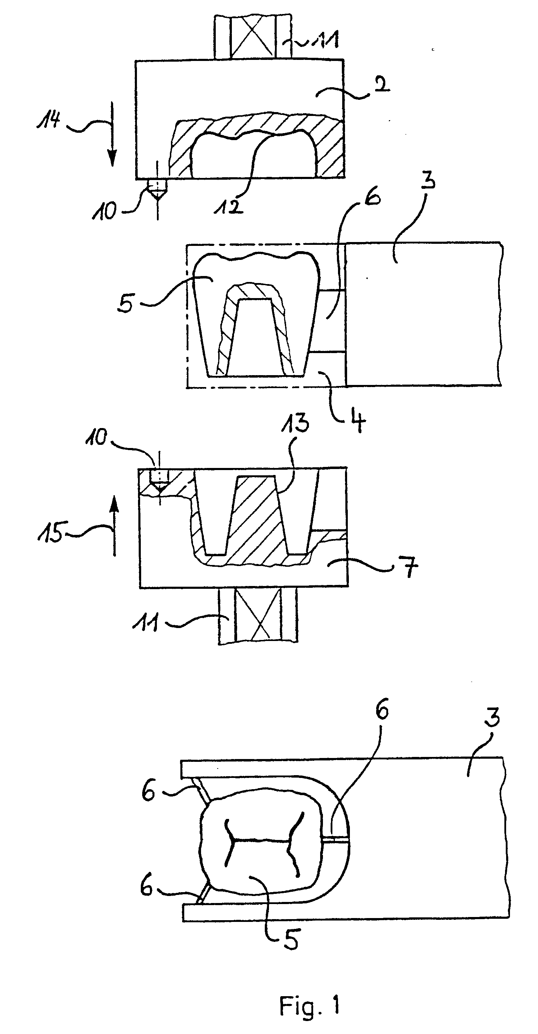

Aus Figur 1 ist eine Vorrichtung zur Herstellung von Zahnersatz aus Vollmaterial 3 ersichtlich. Das Vollmaterial ist dasjenige Material, aus dem der einzusetzende Zahnersatz hergestellt werden soll. Das können z.B. kalt verfestigte Metalle wie Inconell oder auch jeder andere für einen Zahnersatz geeignete Werkstoff sein. Das Zahnersatzteil 5 wird mittels zweier Formelektroden 2 und 7, die auch als obere und untere Formeleektrode bezeichnet werden, gewonnen Diese Elektroden sind an ein Funkenerosionsgerät angeschlossen, das der Übersichtlichkeit halber nicht näher dargestellt ist und entsprechend dem Stand der Technik aufgebaut ist. Die beiden Formelektroden 2 und 7 sind als obere und unter Halbschale ausgebildet und besitzen auf ihrer Innenseite jeweils negative Formen 12 und 13, die eine elektrisch leitende Oberfläche haben und dem Modell des Zahnersatzteils bzw. dem Abdruck des Zahnstumpfes im Kiefer des Patienten nachgebildet sind. Die Formelektroden 2 und 7 besitzen Positionselemente 11 zum Halten der beiden Elektroden und ferner ein Positionselement 10 das die genaue Paßform der beiden Formelektroden zueinander sicherstellt.

Die Negativ-Formen 12 und 13 der Formelektroden 2 und 7 für das Zahnersatzteil 5 können dabei ebenfalls auf erosivem Wege direkt aus einem vorher nicht bearbeiteten Vollmaterial hergestellt werden. Die negativen Formen 12 und 13 der Formelektroden können dabei durch zwei verschiedene Methoden gewonnen werden. Es kann einerseits die obere Formelektrode 2 aus einem Modell des Zahnersatzteiles 5 gewonnen werden, bei dem das Material zur Herstellung des Modells von vornherein elektrisch leitfähig ist. Andererseits kann die untere Formelektrode 7 aus einer negativen Abformung des Zahnstumpfes hergestellt werden, wobei das Material zur Herstellung der negativen Abformung von vornherein aus elektrisch leitfähigem Material besteht.

Eine andere Methode zur Gewinnung der negativen Formen 12 und 13 der Formelektroden 2 und 7 besteht darin, daß die Formelektroden zunächst aus einem nicht elektrisch leitfähigen Grundmaterial bestehen, dessen Oberfläche nachträglich für die negativen Formen 12 und 13 elektrisch leitfähig gemacht werden, was beispeilsweise durch Aufbringen von kolloidalem Silber auf dem nichtleitfähigen Grundmaterial und anschließendem elektrolytischen Abscheiden einer Metallschicht geschehen kann.

Als Abformmaterial für die Formelektroden, die von vornherein aus elektrisch leitfähigem Material hergestellt werden, kommt z.B. Metall, Leitplastik oder Graphit in Frage.

Aus Figur 1 ist ferner ersichtlich, daß die Formen der oberen und unteren Formelektrode 2 und 7 derart ausgebildet sind, daß beim Erodiervorgang zwischen dem entstehenden Zahnersatzteil 5 und dem restlichen Vollmaterial 3 dünne Verbindungsstege erhalten bleiben. Diese Verbindungsstege 6 dienen der Fixierung des Zahnersatzteils 5 während des Bearbeitungsvorgangs und entstehen durch die besondere Gestaltung der Elektroden 2 und 7. Nach dem Erodiervorgang werden die Stege 6 herausgebrochen, die Bruchstellen der Stege geglättet, wobei diese Stege von vornherein an unkritischen Stellen des Zahnersatzes angeordnet worden sind.

Das Verfahren zur Herstellung des Zahnersatzteils 5 aus dem Vollmaterial 3 gemäß Figur 1 arbeitet dabei folgendermaßen. Es werden die beiden Formelektroden 2 und 7 mit ihren negativen Formen 12 und 13 einander zugekehrt auf das Vollmaterial 3 gleichzeitig aufeinander zugefahren, wie die beiden Pfeile 14 und 15 dies andeuten. Damit entsteht das Zahnersatzteil 5 durch gleichzeitiges Aufeinanderzufahren der Formelektroden 2 und 7.

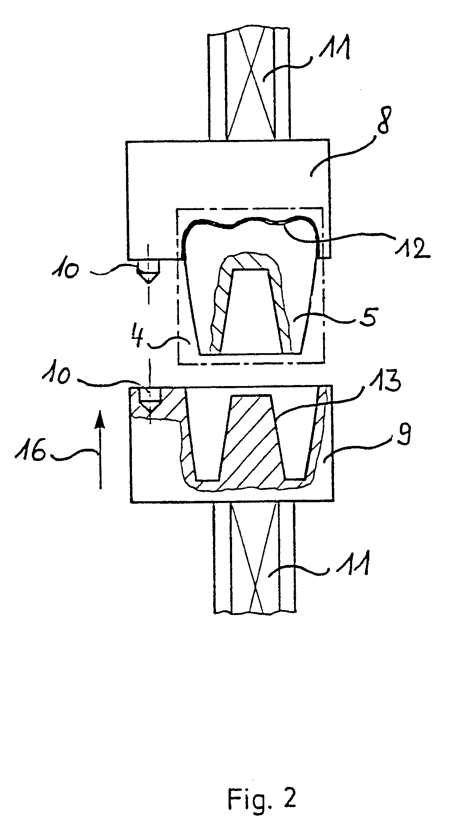

Ein anderes Verfahren zur Gewinnung des Zahnersatzes ist in Figur 2 beschrieben. Dort sind ebenfalls eine obere und eine untere Formelektrode 8 und 9 dargestellt, die identisch mit den bereits beschriebenen Formelektroden 2 und 7 aus dem Ausführungsbeispiel nach Figur 1 ausgebildet sind. Gleiche Teile sind mit gleichen Bezugszeichen versehen und es wird davon abgesehen, diese nochmals zu erläutern. Dieses zweite Verfahren zur Gewinnung des Zahnersatzteils 5 arbeitet wie folgt. Aus dem Vollmaterial 4, das beispielsweise ein Metallklotz sein kann, wird mit der oberen Formelektrode 8 zunächst nur die erste Hälfte des Zahnersatzteils 5 erosiv herausgearbeitet, als erste Hälfte ist hier der Kronenteil des Zahnes herausgearbeitet. Selbstverständlich kann diese Reihenfolge auch umgekehrt sein und es kann zunächst mit dem Herausarbeiten des Unterteils des Zahnersatzteils begonnen werden. Nachdem nun die erste Hälfte des Zahnersatzteils herausgearbeitet ist, wird die bereits vorgeformte Hälfte des Zahnersatzteils 5 beispielsweise durch Kleben mit der negativen Form 12 der Formelektrode 8 verbunden. Dadurch ist das noch nicht fertige entstehende Zahnersatzteil 5 in der Formelektrode 8 fest fixiert. Jetzt erst wird mit der unteren Formelektrode 9 die zweite Hälfte des Zahnersatzteiles 5 erodiert, indem die Formelektrode 9 in Richtung des Pfeiles 16 auf die obere Formelektrode 8 und damit das Zahnersatzteil 5 zugefahren wird. Nach Fertigstellung des Zahnersatzteils 5, das bei dieser Herstellungsmethode keine Verbindungsstege besitzt, wird das Zahnersatzteil 5 aus der negativen Form der oberen Elektrode 8 herausgelöst. Das Zahnersatzteil 5 ist damit fertig, es bedarf zu einem passgenauen Sitz keinerlei Nacharbeit.

## Patentansprüche

1. Verfahren zur Herstellung von Zahnersatzteilen mittels des Funkenerosionsverfahrens zur Bearbeitung des Zahnersatzes unter Verwendung von Formelektroden zum erosiven Abtragen, wobei ein Modell des Zahnersatzes geformt wird und davon negative Abdurckformen erstellt werden, **dadurch gekennzeichnet, daß** als negative Abdruckformen zwei Formelektroden (2,7,8,9) verwendet werden, und daß mit Hilfe der zwei Formelektroden (2,7,8,9) das einzusetzende Zahnersatzteil (5) mittels des Funkenerosionsverfahrens direkt aus dem vorher nicht bearbeiteten Vollmaterial hergestellt wird.

2. Verfahren nach Patentanspruch 1, dadurch gekennzeichnet, daß die Negativ-Formen (12,13) der Formelektroden (2,7,8,9) für das Zahnersatzteil (5) mittels des Funkenerosionsverfahrens direkt aus vorher nicht bearbeitetem Vollmaterial hergestellt werden.

3. Verfahren nach Anspruch 1 und/oder 2, dadurch gekennzeichnet, daß die obere und die untere Formelektrode (2,7) das Zahnersatzteil (5) durch entsprechendes Aufeinanderzufahren aus dem Vollmaterial gleichzeitig herauserodieren.

4. Verfahren nach Anspruch 1 und/oder 2, dadurch gekennzeichnet, daß zuerst eine Formelektrode (8) zum Erodieren der ersten Hälfte des Zahnersatzteils (5) aus dem Vollmaterial dient, und daß anschließend durch starres aber lösbares Verbinden des halbfertigen Zahnersatzteils mit der Formelektrode (8) eine Positionierung des Zahnersatzteils (5) gegenüber der anderen Formelektrode (9) erreicht wird, die danach die zweite Hälfte des Zahnersatzteiles erodiert.

5. Vorrichtung für ein Verfahren gemäß den Ansprüchen 1 bis 4, dadurch gekennzeichnet, daß zwei Formelektroden (2,7,8,9) mit angesetzten Positionselementen (10,11) als obere und untere Halbschale ausgebildet sind, deren negative und elektrisch leitende Formen (12,13) aus dem Modell des Zahnersatzteils als negative Abbildung gebildet sind.

6. Vorrichtung nach Anspruch 5, dadurch gekennzeichnet, daß die eine der negativen Formen (12,13) der Formelektroden (2,7,8,9) direkt von der aus elektrisch leitfähigem Material gemachten negativen Abbildung des Zahnstumpfes hergestellt und die andere direkt von dem aus elektrisch leitfähigem Material gemachten Modell des Zahnersatzteiles gewonnen wird.

7. Vorrichtung nach Anspruch 5, dadurch gekennzeichnet, daß die Formelektroden (2,7,8,9) aus einem elektrisch nichtleitfähigen Grundmaterial bestehen, dessen Oberflächen für die negativen Formen (12,13) elektrisch leitfähig verändert wird.

8. Vorrichtung nach einem oder mehreren der Ansprüche 5 bis 7, dadurch gekennzeichnet, daß die Formen der oberen und unteren Formelektroden (2,7,8,9) derart ausgebildet sind, daß beim Erodiervorgang zwischen dem entstehenden Zahnersatzteil (5) und dem Rest Vollmaterial dünne Verbindungsstege (6) erhalten bleiben.

## Claims

1. A method of manufacturing dental prosthesis members by means of the spark erosion process for production of the prosthesis using shaping electrodes for erosive removal, wherein a pattern of the prosthesis is shaped and negative impression shapes are produced therefrom, characterised in that two shaping electrodes (2, 7, 8, 9) are used as negative impression shapes, and that by means of the two shaping electrodes (2, 7, 8, 9) the dental prosthesis member (5) to be inserted is manufactured by means of the spark erosion process directly from the solid material which has not been previously worked.

2. A method according to claim 1 characterised in that the negative shapes (12, 13) of the shaping electrodes (2, 7, 8, 9) for the dental prosthesis member (5) are manufactured by means of the spark erosion process directly from solid material which has not been previously worked.

3. A method according to claim 1 and/or claim 2 characterised in that the upper and the lower shaping electrodes (2, 7) simultaneously erode the dental prosthesis member (5) out of the solid material by being suitably moved towards each other.

4. A method according to claim 1 and/or claim 2 characterised in that firstly a shaping electrode (8) serves to erode the first half of the dental prosthesis member (5) out of the solid material and that then by the semi-manufactured dental prosthesis member being rigidly but releasably joined to the shaping electrode (8) the dental prosthesis member (5) is positioned relative to the other shaping electrode (9) which thereupon erodes the second half of the dental prosthesis member.

5. Apparatus for a method according to claim 1 to 4 characterised in that two shaping electrodes (2, 7, 8, 9) with position elements (10, 11) fitted thereto are in the form of upper and lower half shells, the negative and electrically conductive shapes (12, 13) of which are formed from the pattern of the dental prosthesis member as a negative reproduction.

6. Apparatus according to claim 5 characterised in that one of the negative shapes (12, 13) of the shaping electrodes (2, 7, 8, 9) is manufactured directly from the negative reproduction of the tooth stump, which is made from electrically conductive material, and the other is obtained directly from the pattern of the dental prosthesis member, which is made from electrically conductive material.

7. Apparatus according to claim 5 characterised in that the shaping electrodes (2, 7, 8, 9) comprise a base material which is electrically non-conductive and the surfaces of which are altered to make them electrically conductive for the negative shapes (12, 13).

8. Apparatus according to one or more of claims 5 to 7 characterised in that the shapes of the upper and lower shaping electrodes (2, 7, 8, 9) are such that thin connecting webs (6) remain in the erosion operation between the resulting dental prosthesis member (5) and the remainder of the solid material.

**Revendications**

1. Procédé pour la fabrication de pièces de prothèse dentaire à l'aide du procédé d'électroérosion pour le façonnage de prothèse dentaire, avec l'utilisation d'électrodes de forme pour l'enlèvement par érosion, selon lequel est formé un modèle de la prothèse dentaire à partir duquel sont établies des empreintes négatives, caractérisé par le fait que deux électrodes de forme (2,7, 8, 9) sont utilisées en tant qu'empreintes négatives et par le fait qu'à l'aide des deux électrodes de forme (2, 7, 8, 9) la pièce de prothèse dentaire (5) à mettre en place est fabriquée directement à l'aide du procédé d'électroérosion à partir de la matière pleine non travaillée préalablement.

2. Procédé de la revendication 1, caractérisé par le fait que les empreintes négatives (12, 13) des électrodes de forme (2, 7, 8, 9) pour la pièce de prothèse dentaire (5) sont fabriquées directement à l'aide du procédé d'électroérosion à partir de la matière pleine non travaillée préalablement.

3. Procédé de la revendication 1 et/ou 2 caractérisé par le fait que les électrodes de forme supérieure et inférieure (2, 7) façonnent simultanément, par érosion, la pièce de prothèse dentaire (5) à partir de la matière pleine par une opération de rapprochement mutuel approprié.

4. Procédé de la revendication 1 et/ou 2 caractérisé par le fait qu'une électrode de forme (8) sert en premier pour l'érosion de la première moitié de la pièce de prothèse dentaire (5), à partir de la matière pleine, et qu'ensuite, par un assemblage rigide mais démontable de la pièce demi-finie de prothèse dentaire avec l'électrode de forme (8),est obtenu un positionnement de la pièce de prothèse dentaire (5) par rapport à l'autre électrode de forme (9) qui réalise alors par érosion la deuxième moitié de la pièce de prothèse dentaire.

5. Dispositif pour la mise en oeuvre du procédé selon les revendications 1 à 4, caractérisé par le fait que deux électrodes de forme (2,7,8,9) ayant des éléments rapportés (10, 11) de positionnement sont aménagées en tant que demi-coquilles supérieure et inférieure dont les empreintes négatives (12, 13), électriquement conductrices, sont conformées en copies négatives à partir du modèle de la pièce de prothèse dentaire.

6. Dispositif selon la revendication 5 caractérisé par le fait que l'une des empreintes négatives (12,13) des électrodes de forme (2, 7, 8,9) est fabriquée directement à partir de la copie négative du tenon de dent faite en une matière électriquement conductrice et l'autre est obtenue directement à partir du modèle de la pièce de prothèse dentaire réalisé en matière électriquement conductrice.

7. Dispositif selon la revendication 5 caractérisé par le fait que les électrodes de forme (2,7, 8, 9) sont en une matière de base électriquement non conductrice dont les surfaces des empreintes négatives (12,13) ont été modifiées pour être électriquement conductrices.

8. Dispositif selon une ou plusieurs des revendications 5 à 7, caractérisé par le fait que les formes des électrodes de forme supérieure et inférieure (2,7, 8, 9) sont configurées de manière que, pendant l'opération d'érosion, de minces entretoises de liaison (6) subsistent entre la pièce de prothèse dentaire (5) en cours d'obtention et le reste de la matière pleine.

Fig. 1

Fig. 2